# EUROPÄISCHE PATENTSCHRIFT

(11) **EP 2 537 403 B1**
(45) Veröffentlichungstag und Bekanntmachung des Hinweises auf die Patenterteilung: **01.01.2014**
(21) Anmeldenummer: 12004662.8
(22) Anmeldetag: 21.06.2012
(51) Int. Cl.: A01D 34/68, A01D 34/82

(54) **Handgeführte selbstfahrende Antriebsmaschine**
Hand-operated self-propelled drive machine
Machine d'entraînement automatique manuelle

(30) Priorität: 22.06.2011 DE 102011105370
(43) Veröffentlichungstag der Anmeldung: 26.12.2012
(73) Patentinhaber: agria-Werke GmbH, 74219 Möckmühl (DE)
(72) Erfinder: Kubach, Erhard, 74081 Heilbronn (DE)
(74) Vertreter: Feldkamp, Rainer

(56) Entgegenhaltungen:
- EP-A2- 1 738 633
- EP-A2- 1 782 724
- US-A1- 2007 022 635

## Beschreibung

Die Erfindung bezieht sich auf eine handgeführte selbstfahrende Antriebsmaschine der im Oberbegriff des Anspruchs 1 genannten Art.

Derartige Antriebsmaschinen werden in Verbindung mit auswechselbaren, mit der Antriebsmaschine kuppelbaren oder fest verbundenen Arbeitsgeräten im weiten Umfang verwendet, wobei die Arbeitsgeräte beispielsweise eine Mähvorrichtung, ein Bodenbearbeitungsgerät und dergleichen umfassen können, die von dem Antriebsmotor der Antriebsmaschine ebenso wie die Antriebsräder angetrieben werden. An dem Lenkholm derartiger Antriebsmaschinen sind manuelle Steuereinrichtungen befestigt, mit denen sowohl die Antriebsleistung bzw. Drehzahl des Antriebsmotors als auch die Drehzahl des Arbeitsgeräts bzw. die auf die Antriebsräder übertragene Kraft steuerbar ist.

Aus der US 2007/0022635 A1 ist eine handgeführte selbstfahrende Antriebsmaschine in Form einer Schneefräse bekannt, die zwei Lenkholme zur Führung der Antriebsmaschine und eine elektronische Steuereinheit für den Antriebsmotor, die Getriebeeinheit und die Schneefräseinrichtung aufweist und die eine durch ein Bedienfeld ansteuerbare Steuereinheit aufweist. Das Bedienfeld ist zwischen den zwei Lenkholmen angeordnet und weist einen auf einer in etwa horizontalen Fläche angeordneten Steuerhebel zur Steuerung sowohl der Fahrtrichtung als auch der jeweils zugeordneten Fahrgeschwindigkeit auf. Durch Betätigen des Fahrhebels kann eine Bedienungsperson sowohl die Fahrtrichtung als auch die jeweilige Fahrgeschwindigkeit ändern. Hierbei ist es jedoch erforderlich, dass die Bedienungsperson zumindest eine Hand von einem der Lenkholme löst und den Fahrhebel betätigt.

Der Erfindung liegt die Aufgabe zugrunde, eine Antriebsmaschine der eingangs genannten Art zu schaffen, die eine vereinfachte und ermüdungsfreie Bedienung auch über längere Arbeitszeiten hinweg ermöglicht.

Diese Aufgabe wird durch die im Patentanspruch 1 angegebenen Merkmale gelöst.

Vorteilhafte Ausgestaltungen und Weiterbildungen der Erfindung ergeben sich aus den Unteransprüchen.

Die erfindungsgemäße Antriebsmaschine weist in üblicher Weise ein von Rädern getragenes Fahrgestell auf, auf dem ein Antriebsmotor und eine Getriebeeinheit zum Antrieb von Antriebsrädern und von mit der Antriebsmaschine auswechselbar kuppelbaren Arbeitsgeräten befestigt ist. An dem Fahrgestell ist weiterhin zumindest ein Lenkholm zur Führung des Antriebsmaschine befestigt. Die Antriebsmaschine weist weiterhin eine elektronische Steuereinheit für den Antriebsmotor und/oder die Getriebeeinheit /und/oder des Arbeitsgerätes und ein dem zumindest einen Lenkholm in Reichweite der Finger einer die Arbeitsmaschine führenden Bedienungsperson befestigtes Bedienfeld für die elektronische Steuereinheit auf. Das Bedienfeld umfasst zumindest eine erste Betätigungseinrichtung zum Umschalten des Fahrantriebs auf Rückwärtsfahrt, bei deren Betätigung die Steuereinrichtung eine Verringerung der Vorwärtsgeschwindigkeit auf Null und eine nachfolgend bis auf einen vorgegebenen Wert ansteigende Rückwartsgeschwindigkeit der Antriebsmaschine ansteuert.

Hierbei ist es möglich, dass die Steuereinrichtung nach Beenden der Betätigung der ersten Betätigungseinrichtung die Rückwärtsfahrt stoppt und die Antriebsmaschine wieder in Vorwärts-Fahrtrichtung, vorzugsweise auf die vorher eingestellte Vorwärts-Fahrgeschwindigkeit, ansteuert

Die Getriebeeinheit schließt in vorteilhafter Weise einen von der Steuereinrichtung steuerbaren gestuften und/oder stufenlosen Fahrantrieb ein, und das Bedienfeld enthält zweite Betätigungseinrichtungen zur Ansteuerung der Steuereinheit zur stufenlosen und/oder gestuften Vergrößerung bzw. Verkleinerung der Fahrgeschwindigkeit der Antriebsmaschine.

Die elektronische Steuereinheit ist in vorteilhafter Weise mit Speichereinrichtungen zur Speicherung von an dem Bedienfeld einstellbaren Fahrgeschwindigkeiten der Antriebsmaschine in Vorwärts- und Rückwärtsrichtung sowie mit dritten Betätigungseinrichtungen an dem Bedienfeld zum Stoppen des Fahrantriebs verbunden.

Gemäß einer weiteren vorteilhaften Ausgestaltung der Erfindung weist die elektronische Steuereinrichtung durch vierte Betätigungseinrichtungen des Bedienfeldes aktivierbare Einrichtungen zur Überwachung der Drehzahl des Antriebsmotors und zur Überwachung der Fahrgeschwindigkeit auf, wobei die Steuereinrichtung eine Verringerung der Fahrgeschwindigkeit bewirkt, wenn die Drehzahl des Antriebsmotors unter einen vorgegebenen Sollwert absinkt.

Die Erfindung wird nachfolgend anhand einer in den Zeichnungen dargestellten Ausführungsfom noch näher beschrieben.

In den Zeichnungen zeigen:
- Figur 1: eine schematische Seitenansicht einer Ausführungsform der erfindungsgemäßen Antriebsmaschine,
- Figur 2: eine Draufsicht auf die Antriebsmaschine nach Figur 1,
- Figur 3: eine vergrößerte Ansicht des Bedienfeldes der Antriebsmaschine nach den Figuren 1 und 2,
- Figur 4: ein Blockschaltbild einer Ausführungsform der elektronischen Steuereinheit.

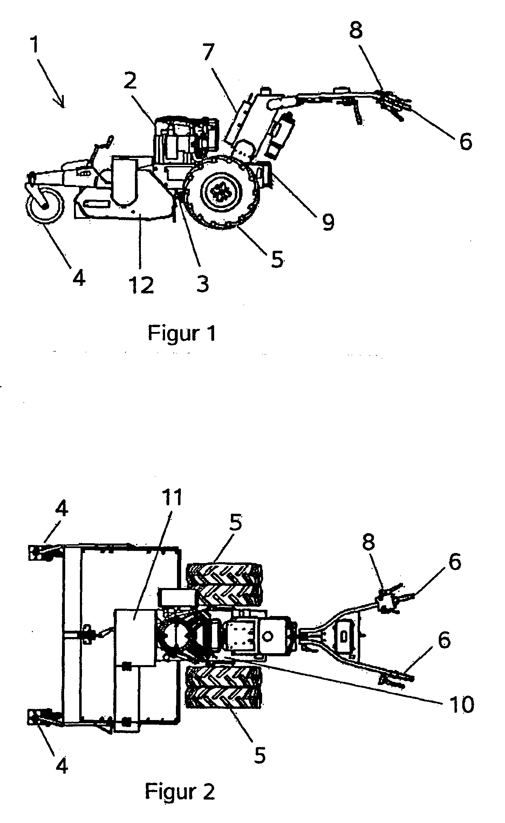

In den Figuren 1 und 2 ist schematisch eine Antriebsmaschine 1 gezeigt, die ein von Antriebsrädern 5 und Lenk- oder Nachlaufrädern 4 getragenes Fahrgestell 11 aufweist, auf dem ein Antriebsmotor 2 angeordnet ist, der über einen stufenlosen und/oder gestuften Fahrantrieb 3 die Antriebsräder 5 antreibt. An dieser Antriebsmaschine ist ein schematisch mit 12 bezeichnetes Arbeitsgerät angekuppelt, das über eine nicht dargestellte Zapfwelle von dem Antriebsmotor 2 mit angetrieben wird. Dieses Arbeitsgerät kann gegebenenfalls über entsprechende Halterungen auch die Lenkräder 4 selbst tragen.

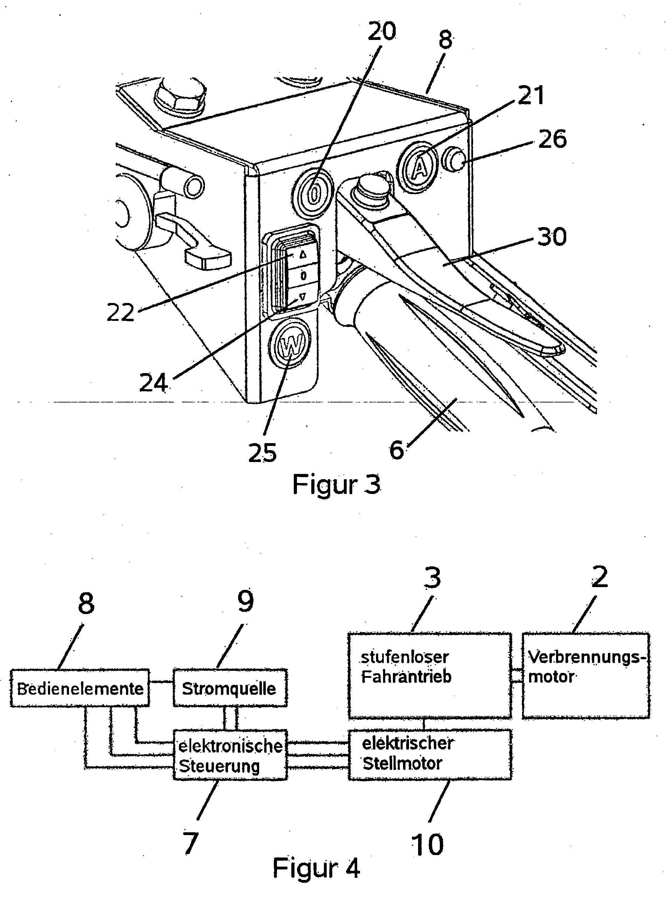

An dem Fahrgestell 11 sind weiterhin über eine Stützsäule zwei Handholme 6 befestigt, die zur Führung und zum Lenken der Antriebsmaschine 1 dienen. An diesen Handholmen sind weitere Bedienungseinrichtungen für die Antriebsmaschine 1 und/oder das Arbeitsgerät 12 angebracht, wobei bei der dargestellten Ausführungsform der rechte Handholm 6 nach Figur 2 weiterhin ein Bedienfeld 8 trägt, das weiter unten anhand der Figur 3 noch näher erläutert wird.

An der Stützsäule ist weiterhin ein Gehäuse für eine elektronische Steuereinheit 7 angebracht, das die weiter unten beschriebenen Steuerfunktionen ergibt. Diese Steuereinheit kann durch eine Stromversorgung 9 gespeist werden, die auch zu anderen Versorgungszwecken der Antriebsmaschine 1 dienen kann.

Obwohl vorstehend eine spezielle Ausführungsform der Antriebsmaschine 1 anhand der Figuren 1 und 2 beschrieben wurde, können die nachstehend beschriebenen Prinzipien bei andersartigen Antriebsmaschinen dieser allgemeinen Art verwendet werden.

In Figur 3 ist das in den Figuren 1 und 2 nur schematisch dargestellte Bedienfeld 8 mit weiteren Einzelheiten dargestellt.

Das Bedienfeld ist am rechten Handholm 6 der Antriebsmaschine 1 befestigt, wobei dieser Handholm 6 weitere nur schematisch bei 30 dargestellte manuelle Betätigungseinrichtungen für die Antriebsmaschine und des Arbeitsgerätes, insbesondere nach Art eines Totmannschalters 30 trägt . Die Bedienungselemente des Bedienfeldes 8 sind somit jederzeit mit dem Daumen oder dem Zeigefinger einer die Antriebsmaschine führenden Bedienungsperson erreichbar.

Die Bedienungselemente des Bedienfeldes beinhalten vorzugsweise folgende Funktionen, die die Steuerung und Bedienung der damit ausgestatteten Antriebsmaschinen vereinfachen:
einen Wipptaster 22, 24 zur Geschwindigkeitsverstellung für beide Fahrtrichtungen der Antriebsmaschine 1,
einen Nulltaster 20 zur Nullstellung des Fahrantriebs,
einen Wendeassistenz-Taster 25 zur einfachen Durchführung von Wendevorgängen.
einen automatische Geschwindigkeitsanpassungstaster 21,
eine oder mehrere Kontrollleuchten 26 zur Anzeige des jeweiligen Betriebszustandes.

Mit diesen Bedienungselementen sind folgende Funktionen steuerbar:

### A. Wipptaster 22, 24:

Der Wipptaster 22, 24 ist in die Neutralstellung vorgespannt und verstellt bei seiner Betätigung die Fahrgeschwindigkeit der Antriebsmaschine 1. Die Veränderung der Geschwindigkeit ist in beiden Richtungen möglich und davon abhängig welche Seite 22, 24 des Wipptasters betätigt wird. Die Geschwindigkeitsverstellung vorwärts erfolgt stufenlos oder in mehreren Stufen, beginnend bei 0 Km/h bis maximal 7 km/h, wobei zusätzlich auch ebenso eine Verstellung der Rückfahrgeschwindigkeit erfolgen kann.

Die jeweilige Fahrgeschwindigkeit kann in der Steuereinheit gespeichert werden.

### B. Neutraltaster 20:

Durch kurze Betätigung des Neutraltasters 20 wird der hydrostatische Fahrantrieb 3 der Antriebsmaschine gestoppt. Der Antriebsmotor und die hiervon angetriebene Zapfwelle für den Antrieb des Arbeitsgerätes 12 bleiben davon unverändert in ihrem Betriebszustand.

### C. Wendeassistenz-Taster 25:

Der Taster 25 für den Wendeassistenten vereinfacht den Wendevorgang am Zeilenende oder das Ausmähen von kurzen und schmalen Passagen. Durch Drücken und Festhalten des Wendeassistenz-Tasters 25 verzögert die Steuereinheit 7 die Vorwärts-Fahrgeschwindigkeit der Antriebsmaschine 1 bis auf 0 Km/h und geht in eine fest eingestellte Rückwärts-Fahrgeschwindigkeit über. Dabei kann der Wende- oder Rangiervorgang vollzogen, bzw. schmale und kurze Passagen auf einfache Weise rückwärts wieder verlassen werden. Sobald der Taster 25 gelöst wird, geht die Antriebsmaschine wieder in ihre zuletzt eingestellte Vorfahrtsgeschwindigkeit über.

### D. Automatische Geschwindigkeitsanpassung (Taster 21):

Die mit Hilfe des Tasters 21 einschaltbare automatische Geschwindigkeitsanpassung ist hilfreich bei schwankendem Leistungsbedarf des mit der Zapfwelle verbundenen Arbeitsgerätes 12 oder bei stark kupiertem Gelände, was beides zu unterschiedlichem Motorleistungsbedarf führt. Durch kurzes Betätigen des Tasters 21 wird die Motordrehzahl des Antriebsmotors 2 überwacht. Veringert sich die Drehzahl des Antriebsmotor aufgrund von Lastspitzen unter die optimale Drehzahl, so wird die Vorwärts-Fahrgeschwindigkeit der Antriebsmaschine 1 reduziert. Sobald der Antriebsmotor 2 seine optimale Drehzahl wieder erreicht hat, wird die zuvor ursprünglich eingestellte Fahrgeschwindigkeit wieder angesteuert. Mit Betätigung des O-Tasters 20 wird dieser Überwachungsmodus wieder ausgeschaltet.

In Figur 4 ist ein Blockschaltbild einer Ausführungsform der Steuereinheit 7 sowie des Bedienfeldes 8 gezeigt. Die Bedienungselemente des Bedienfeldes 8 sind mit der elektronischen Steuereinheit 7 verbunden, die aus der Stromquelle 9 gespeist wird. Diese elektronische Steuerung steuert in der anhand der Figur 3 beschriebenen Weise die einzelnen Funktionen und insbesondere einen elektrischen Stellmotor 10 für einen stufenlosen Fahrantrieb 3 der Antriebsräder 5 nach den Figuren 1 und 2, wobei der stufenlose Fahrantrieb 3 von einem Antriebsmotor, beispielsweise in Form eines Verbrennungsmotors oder Elektromotors angetrieben wird. Über den elektrischen Stellmotor 10 kann die elektronische Steuereinheit 7 in Abhängigkeit von der Betätigung der Bedienungselemente des Bedienfeldes 8 die einzelnen vorstehend genannten Arbeitsfunktionen des Fahrantriebs in automatischer Weise steuern, so dass die Bedienungsperson der Antriebsmaschine 1 wesentlich entlastet wird und viele Funktionen automatisch ausgeführt werden können.

## Patentansprüche

1. Handgeführte selbstfahrende Antriebsmaschine (1) mit einem von Rädern (4, 5) getragenen Fahrgestell (11), auf dem ein Antriebsmotor (2) und eine Getriebeeinheit (3) zum Antrieb von Antriebsrädern und von mit der Antriebsmaschine (1) fest verbundenen oder mit dieser auswechselbar kuppelbaren Arbeitsgeräten (12) befestigt ist, mit zumindest einem Lenkholm (6) zur Führung der Antriebsmaschine, und mit einer elektronischen Steuereinheit (7) für den Antriebsmotor (2) und/oder die Getriebeeinheit (3) und/oder des Arbeitsgerätes (12), wobei die elektronische Steuereinheit (7) Speichereinrichtungen zur Speicherung von an dem Bedienfeld (8) einstellbaren Fahrgeschwindigkeiten der Antriebsmaschine in Vorwärts- und Rückwärtsrichtung der Antriebsmaschine (1) einschließt, **dadurch gekennzeichnet, dass** das Bedienfeld (8) für die elektronische Steuereinheit (7) an dem zuminoest einen Lenkholm (6) in Reichweite der Finger einer die Arbeitsmaschine (1) führenden Bedienungsperson befestigt ist, und dass das Bedienfeld (8) zumindest eine durch einen Tasterschalter (25) gebildete erste Betätigungseinrichtung zum Umschalten des Fahrantriebs (3) auf Rückwärtsfahrt aufweist, bei deren Betätigung die Steuereinrichtung (7) eine Verringerung der Vorwärtsgeschwindigkeit auf Null und eine nachfolgend bis auf einen vorgegebenen Wert ansteigende Rückwärtsgeschwindigkeit der Antriebsmaschine ansteuert, wobei die Steuereinrichtung (7) nach Beenden der Betätigung des Tasterschalters (25) die Rückwärtsfahrt stoppt und die Antriebsmaschine (7) wieder in Vorwärts-Fahrtrichtung ansteuert.

2. Antriebsmaschine nach Anspruch 1 oder 2, **dadurch gekennzeichnet, dass** die Getriebeeinheit (3) durch einen von der Steuereinrichtung (7) steuerbaren gestuften und/oder stufenlosen Fahrantrieb (3) einschließt.

3. Antriebsmaschine nach einem der vorhergehenden Ansprüche, **dadurch gekennzeichnet, dass** das Bedienfeld (8) zweite Betätigungseinrichtungen (22, 24) zur Ansteuerung der Steuereinheit (7) zur stufenlosen und/oder gestuften Vergrößerung bzw. Verkleinerung der Fahrgeschwindigkeiten der Antriebsmaschine (1) aufweist.

4. Antriebsmaschine nach einem der vorhergehenden Ansprüche, **dadurch gekennzeichnet, dass** die elektronische Steuereinheit (7) Speichereinrichtungen zur Speicherung von an dem Bedienfeld (8) einstellbaren Fahrgeschwindigkeiten der Antriebsmaschine in Vorwärts- und Rückwärtsrichtung der Antriebsmaschine (1) sowie Betätigungseinrichtungen (20) an dem Bedienfeld (8) zum Stoppen des Fahrantriebs (3) aufweist.

5. Antriebsmaschine nach einem der vorhergehenden Ansprüche, **dadurch gekennzeichnet, dass** der vorgegebenen Wert der Rückwärtsgeschwindigkeit einstellbar ist.

6. Antriebsmaschine nach einem der vorhergehenden Ansprüche, **dadurch gekennzeichnet, dass** die elektronische Steuereinrichtung (7) durch vierte Betätigungseinrichtungen (21) des Bedienfeldes (8) aktivierbare Einrichtungen zur Überwachung der Drehzahl des Antriebsmotors (2) und zur Überwachung der Fahrgeschwindigkeit aufweist, und dass die Steuereinrichtung (7) die Fahrgeschwindigkeit anpasst, wenn die Drehzahl des Antriebsmotors (2) von einer optimalen Drehzahl abweicht, bis die optimale Drehzahl wieder erreicht ist.

## Claims

1. A hand-guided self-propelled drive machine (1) comprising a chassis (11) which is supported by wheels (4, 5) and on which are fixed a drive engine (2) and a transmission unit (3) for driving drive wheels and working implements (12) which are fixedly connected to the drive machine (1) or which can be interchangeably coupled thereto, comprising at least one steering bar (6) for guiding the drive machine, and comprising an electronic control unit (7) for the drive engine (2) and/or the transmission unit (3) and/or the working implement (12), wherein the electronic control unit (7) includes memory devices for the storage of travel speeds which are settable at the operating panel (8) in respect of the drive machine in the forward and reverse directions of the drive machine (1), **characterised in that** the operating panel (8) for the electronic control unit (7) is fixed to the at least one steering bar (6) in the reach of the fingers of an operator guiding the working machine (1), and the operating panel (8) has at least one first actuating device formed by a pushbutton switch (25) for switching over the travel drive (3) to reverse travel, upon the actuation of which the control device (7) implements a reduction in the forward speed to zero and a reverse speed of the drive machine, which subsequently rises to a predetermined value, wherein after the end of actuation of the pushbutton switch (25) the control device (7) stops the reverse travel and actuates the drive machine (7) in the forward direction again.

2. A drive machine according to claim 1 **characterised in that** the transmission unit (3) includes a stepped and/or stepless travel drive (3) controllable by the control device (7).

3. A drive machine according to one of the preceding claims **characterised in that** the operating panel (8) has second actuating devices (22, 24) for actuation of the control unit (7) for stepless and/or stepped increase or reduction in the travel speeds of the drive machine (1).

4. A drive machine according to one of the preceding claims **characterised in that** the electronic control unit (7) has memory devices for storage of travel speeds which are settable at the operating panel (8) in respect of the drive machine in the forward and reverse directions of the drive machine (1) and actuating devices (20) on the operating panel (8) for stopping the travel drive (3).

5. A drive machine according to one of the preceding claims **characterised in that** the predetermined value of the reverse speed is adjustable.

6. A drive machine according to one of the preceding claims **characterised in that** the electronic control device (7) has devices activatable by fourth actuating devices (21) of the operating panel (8) for monitoring the rotary speed of the drive engine (2) and for monitoring the travel speed and the control device (7) adapts the travel speed if the rotary speed of the drive engine (2) departs from an optimum rotary speed until the optimum rotary speed is regained.

## Revendications

1. Machine d'entraînement automatique manuelle (1) comportant un châssis (11) porté par des roues (4,5), sur lequel un moteur d'entraînement (2) et une unité de transmission (3) pour entraîner les roues d'entraînement et fixé par des appareils de travail (12) solidement reliés à la machine d'entraînement (1) pouvant être couplés de manière remplaçable à celle-ci, comportant au moins un guidon (6) pour guider la machine d'entraînement et comportant une unité de commande électronique (7) pour le moteur d'entraînement (2) et/ou l'unité de transmission (3) et/ou l'appareil de travail (12), dans laquelle l'unité de commande électronique (7) inclut des dispositifs de mémorisation pour mémoriser les vitesses de conduite de la machine d'entraînement dans la direction avant et arrière de la machine d'entraînement (1) sur le champ de commande (8), **caractérisée en ce que** le champ de commande (8) pour l'unité de commande électronique (7) est fixé sur au moins un guidon (6) à portée de doigt d'un opérateur guidant la machine de travail (1), et **en ce que** le champ de commande (8) présente au moins un premier dispositif d'actionnement formé par un interrupteur à bouton poussoir (25) afin de commuter l'entraînement de conduite (3) sur une conduite en marche arrière, actionnement lors duquel le dispositif de commande (7) pilote une diminution de la vitesse en marche avant à zéro et une vitesse en marche arrière de la machine d'entraînement augmentant ensuite jusqu'à une valeur prescrite, dans laquelle le dispositif de commande (7) après la fin de l'actionnement de l'interrupteur à bouton poussoir (25) arrête la conduite en marche arrière et pilote à nouveau la machine d'entraînement (7) en direction de conduite avant.

2. Machine d'entraînement selon les revendications 1 ou 2, **caractérisée en ce que** l'unité de transmission (3) induit un entraînement de conduite par paliers et/ou sans paliers pouvant être commandé par le dispositif de commande (7).

3. Machine d'entraînement selon une des revendications précédentes, **caractérisée en ce que** le champ de commande (8) présente des deuxièmes dispositifs d'actionnement (22,24) pour piloter l'unité de commande (7) afin d'augmenter ou diminuer sans paliers et/ou par paliers les vitesses de conduite de la machine d'entraînement (1).

4. Machine d'entraînement selon une des revendications précédentes, **caractérisée en ce que** l'unité de commande électronique (7) présente des dispositifs de mémorisation pour mémoriser des vitesse de conduite de la machine d'entraînement dans la direction avant et arrière de la machine d'entraînement (1) réglables sur le champ de commande (8) ainsi que des dispositifs d'actionnement (20) sur le champ de commande (8) pour arrêter l'entraînement de conduite (3).

5. Machine d'entraînement selon une des revendications précédentes, **caractérisée en ce que** la valeur prescrite de la vitesse en marche arrière peut être réglée.

6. Machine d'entraînement selon une des revendications précédentes, **caractérisée en ce que** le dispositif de commande électronique (7) présente des dispositifs de surveillance de la vitesse de rotation du moteur d'entraînement (2) et de surveillance de la vitesse de conduite actionnables par des quatrièmes dispositifs d'actionnement (21) du champ de commande (8), et **en ce que** le dispositif de commande (7) adapte la vitesse de conduite, quand la vitesse de rotation du moteur d'entraînement (2) s'écarte d'une vitesse de rotation optimale, jusqu'à ce que la vitesse de rotation optimale soit à nouveau atteinte.
